# EUROPEAN PATENT SPECIFICATION

(11) **EP 2 637 111 B1**
(45) Date of publication and mention of the grant of the patent: **29.05.2019**
(21) Application number: 13151082.8
(22) Date of filing: 11.01.2013
(51) Int. Cl.: G06F 17/30

(54) **Data management system and method using database middleware**
Datenverwaltungssystem und Verfahren, das Datenbank-Middleware verwendet
Système et procédé de gestion de données au moyen d'un progiciel de base de données

(30) Priority: 05.03.2012 KR 20120022434
(43) Date of publication of application: 11.09.2013
(73) Proprietor: Naver Corporation, Seongnam-si, Gyeonggi-do 463-867 (KR)
(72) Inventor: Kim, SungKyu, Seongnam-si (KR); Jun, Wonhee, Seongnam-si (KR); Nam, Chang Woo, Seongnam-si (KR); Park, Boosik, Seongnam-si (KR); Jeong, Kihyo, Seongnam-si (KR)
(74) Representative: Klunker IP Patentanwälte PartG mbB

(56) References cited:
- US-A1- 2009 240 664
- XIN ZHANG ET AL: "Building extensible and high performance distributed transaction service", SOFTWARE ENGINEERING CONFERENCE, 2004. PROCEEDINGS. 2004 AUSTRALIAN MELBOURNE, AUSTRALIA 13-16 APRIL 2004, PISCATAWAY, NJ, USA,IEEE, 13 April 2004 (2004-04-13), pages 202-210, XP010698508, ISBN: 978-0-7695-2089-6
- "Partition (database) - Wikipedia, the free encyclopedia", , 23 September 2011 (2011-09-23), pages 1-3, XP55054202, Retrieved from the Internet: URL:http://en.wikipedia.org/w/index.php?ti tle=Partition(database)&oldid0452021987 [retrieved on 2013-02-21]

## Description

### BACKGROUND OF THE INVENTION

### FIELD OF THE INVENTION

Exemplary embodiments of the present invention relate to a data management system and method using database middleware.

### DISCUSSION OF THE BACKGROUND

US 2009/0240664 A teaches a distributed database system comprising multiple compute nodes each running an instance of a database management system program that accesses database records in a local buffer cache.

A relational database may refer to an aggregate of data entries configured by a set of standardized tables, and data of the relational database may be accessed or combined in various manners without reconfiguring a database table. A standard search language of the relational database, hereinafter referred to as "SQL", may connect a user and the relational database, and an SQL syntax may be used to place an inquiry as to data in the relational database directly or extract a report. The relational database may be relatively easy to create or use, and more particularly, easy to expand. Without changing associated application programs subsequent to initial creation of a database, a new data entry may be added to the database.

Here, a method for diffusively storing data and maintaining the data throughout several databases and may be used when a vast amount of data is to be stored and queried using a single
database. For example, a conventional art may divide tables to diffusively store the divided tables throughout several databases, and calculate a rule for conducting a search of a database including data desired in an application. Accordingly, the conventional art may be faced with an issue of increasing complexity of the application. Further, another problem lies in that the application is required to be changed in instances of tables being additionally divided or a database being increased.

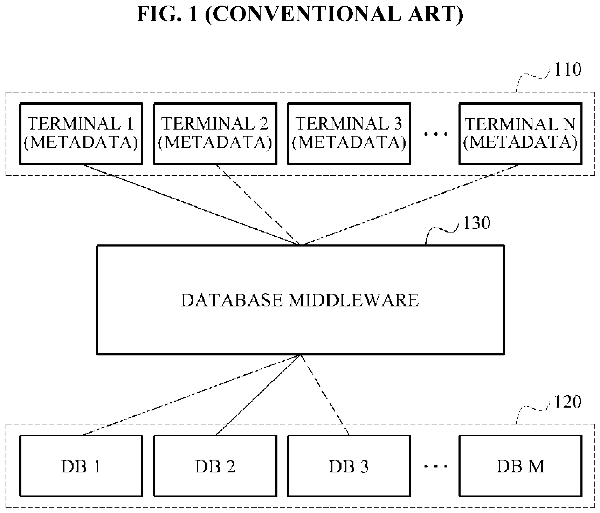

FIG. 1 is a diagram illustrating a data management method according to a conventional art. FIG. 1 illustrates an example in which database middleware 130 receives an input of a query and processes data, in an instance of a plurality of users placing an inquiry as to data stored in a plurality of databases 120 through a plurality of terminals 110, that is, applications. Here, the data management method according to the conventional art may create a key in an application, and select a database for storing, placing an inquiry, and creating data from among the plurality of databases 120 using metadata included. In this instance, each of the plurality of databases 120 may have different names, and be identified by the different names. For example, when a terminal 2 may intend to add data and a database to which the data to be added is "DB 3", the terminal 2 may verify whether the database to which the data is to be added is "DB 3" directly based on a predetermined rule, and create a query to add the data to "DB 3". In this example, since the query needs to be created by searching for a necessary database in an application directly, complexity of the application may increase. Also, in an instance of tables being additionally divided or a database being increased, an issue of a change occurring in the application may arise since data or a database desired by the application may need to be searched for directly.

Exemplary embodiments of the present invention may provide a system and method for effectively managing data diffusively stored in a plurality of databases.

### SUMMARY OF THE INVENTION

In accordance with the present invention, there is a data management system according to independent claim 1, a data management method according to independent claim 3 and a computer-readable medium according to independent claim 5.

An exemplary embodiment of the present invention discloses a data management system including database middleware, wherein the database middleware includes a shard processing module to create a shard key identification (ID) based on a query input and select one of a plurality of databases through a shard ID determined using the created shard key ID and shard metadata.

The plurality of databases may include heterogeneous databases, and the database middleware may further include a plurality of client library modules executing queries for each of the heterogeneous databases, respectively.

The database middleware may further include at least one of a job queue module to distribute a request from an application for a connection, to an available process, a connection pooling module to maintain a simultaneous connection of multiple users to a database and to reuse the connection when necessary, a monitoring module to collect state information and statistics information through a real-time monitoring, a database interface module to process a database instruction from a user, and a logging module to create an event log with respect to occurrences of an error or a query being executed.

The shard processing module may select the shard ID by further using a predetermined hint included in the query input.

The predetermined hint may include a hint preceding a bind variable or a literal value to select the shard ID for processing the query input when a single shard key is present in a single database.

The predetermined hint may include a hint to process a table absent a shard key when a single shard key is present in a single database.

The predetermined hint may include a hint to select data included in each shard when a single shard key is present in a single database.

The predetermined hint may include a hint to select data by selecting a predetermined shard key when a plurality of shard keys is present in a single database.

An exemplary embodiment of the present invention discloses a data management method in a data management system including database middleware, wherein the shard processing module included in the database middleware includes executing a function to obtain a shard key value and a function to obtain a shard key identification (ID), and selecting one of shard IDs to identify each of the plurality of databases using return values of the functions and shard metadata set in the database middleware.

An exemplary embodiment of the present invention discloses a computer-readable recording medium storing instructions for a computer system to provide a webpage, wherein the instructions include executing a function for obtaining a shard key value and a function for obtaining a shard key identification (ID), and selecting a single shard ID from among shard IDs for identifying each of a plurality of databases using a return value and shard metadata set in database middleware.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the principles of the invention.
FIG. 1 is a diagram illustrating a data management method according to a conventional art.
FIG. 2 is a diagram illustrating a data management method according to an exemplary embodiment of the present invention.
FIG. 3 is a diagram illustrating a method for selecting data when a single shard key is present in a single database according to an exemplary embodiment of the present invention.
FIG. 4 is a diagram illustrating a method for processing a table absent a shard key when a single shard is present in a single database according to an exemplary embodiment of the present invention.
FIG. 5 is a diagram illustrating a method for selecting data in a shard when a single shard key is present in a single database according to an exemplary embodiment of the present invention.
FIG. 6 is a diagram illustrating a method for selecting data when a plurality of shard keys is present in a single database according to an exemplary embodiment of the present invention.
FIG. 7 is a diagram illustrating an example of a method for creating a shard key identification (ID) and selecting a shard according to an exemplary embodiment of the present invention.
FIG. 8 is a block diagram illustrating an example of an internal configuration of a data management system according to an exemplary embodiment of the present invention.
FIG. 9 is a flowchart illustrating a data management method according to an exemplary embodiment of the present invention.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element is referred to as being "connected to" another element, it can be directly connected to the other element, or intervening elements may be present.

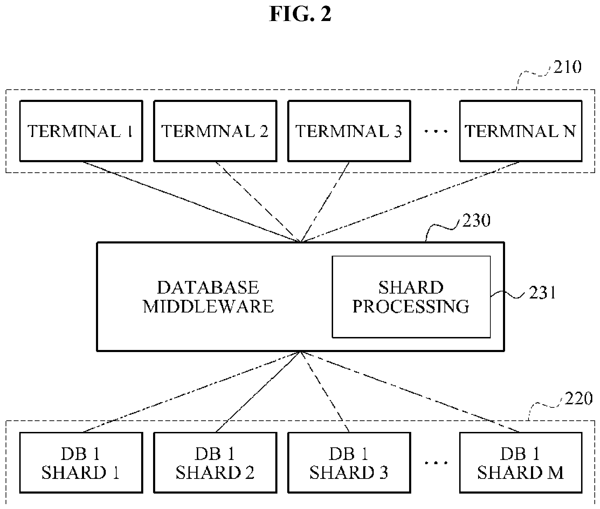

FIG. 2 is a diagram illustrating a data management method according to an exemplary embodiment of the present invention. Referring to FIGS.1 and 2, FIG. 2 illustrates an example in which database middleware 230 receives an input of a query and processes data, in an instance of a plurality of users placing an inquiry as to data stored in a plurality of databases 220 through a plurality of terminals 210, that is, applications. In FIG. 2, the database middleware 230 may include a shard processing module 231. Here, the plurality of databases 220 may have a single database name, and be classified as a plurality of shards.

The database middleware 230 may create a shard key identification (ID) using the shard processing module 231, and select a shard, that is, a database, using the shard key ID created and shard metadata. For example, the database middleware 230 may create a hash value as a shard key ID by hashing a shard key using a hash function. Here, the hash function may output the hash value by receiving an input of a shard key value, and use the hash value output as the shard key ID. For example, the shard metadata may be included in a settings file of the database middleware 230.

As another example, the shard metadata may be included in a plurality of databases. In this instance, the database middleware 230 may determine a shard ID with reference to the shard metadata included in at least one of the plurality of databases using the shard processing module 231. Here, the database middleware 230 may select a shard, that is, a database, using the determined shard ID.

Since the database middleware 230 may select a suitable database using the shard processing module 231, the database middleware 230 may not need to select the suitable database from among the plurality of databases 220 in the application directly, thereby reducing complexity of the application. Also, additional dividing of tables or increasing a database may be possible without changing the application since metadata included in the application for selecting a suitable database in the conventional art may be unnecessary. Further, various hashing schemes such as an internal hashing scheme, a hashing scheme registered by a user, and the like, may be used.

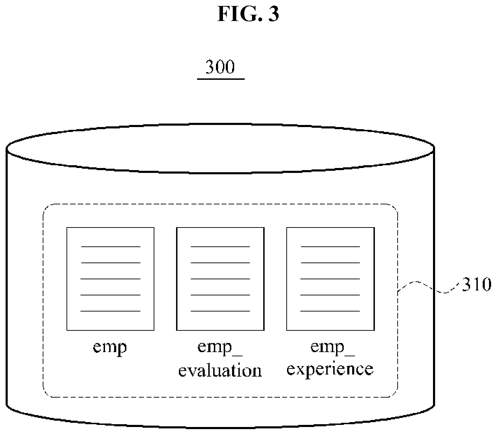

Here, a query transferred to the database middleware 230 from the application may include a variety of hints. Hereinafter, examples of the variety of hints will be described with reference to FIGS. 3 to 5.

FIG. 3 is a diagram illustrating a method for selecting data when a single shard key is present in a single database according to an exemplary embodiment of the present invention. FIG. 3 illustrates a single database 300. Here, the database 300 may include a user table 310. In this instance, the user table 310 may include three tables of "emp", "emp_evaluation", and "emp_experience" each including a column referred to as "emp_no". For example, the database middleware 230 of FIG. 2 may include shard metadata in a settings file, and the shard metadata may include information for identifying a table such as the "emp_no". As described above, the shard metadata may be included in each of the plurality of databases according to another exemplary embodiment of the present invention.

Here, a query transferred from the application may include a hint such as "/*+ SHARD_{_}KEY */". The hint "/*+ SHARD_KEY */" may be used when a single shard key is present in a single database, and precede a literal value corresponding to a shard key column or precede "?" for a bind variable. In a query provided as an example, a first and a third "SELECT" statements illustrate that the hint "/*+ SHARD_KEY */" precedes "?", and a second "SELECT" statement illustrates that the hint "/*+ SHARD KEY */" precedes a shard key column value "1".

```
  SELECT * FROM emp
          WHERE emp no = /*+ SHARD_KEY */?
  SELECT * FROM emp_evaluation
          WHERE emp no = /*+ SHARD_KEY */1
  SELECT * FROM emp experience
          WHERE emp no IN {/*+ SHARD KEY */?, /*+ SHARD_KEY */?}
```

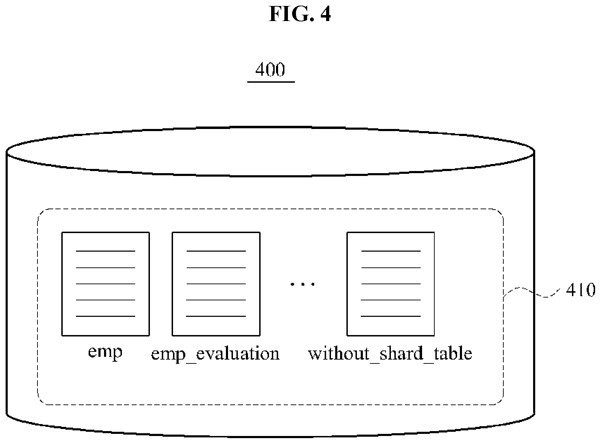

FIG. 4 is a diagram illustrating a method for processing a table absent a shard key when a single shard is present in a single database according to an exemplary embodiment of the present invention. FIG. 4 illustrates a single database 400. Here, the database 400 may include a user table 410. In this instance, the user table 410 illustrates two tables "emp" and "emp_evaluation" each including a column referred to as "emp_no", and also illustrates a table "without_shard_table" absent a shard key.

Here, the database middleware 230 of FIG. 2 may include shard metadata. For example, the shard metadata may include information for identifying a necessary table such as "emp_no". As described above, the shard metadata may be included in each of the plurality of databases according to another exemplary embodiment of the present invention.

In this instance, a query may include a hint "/*+ SHARD VAL(value) */". The hint "/*+ SHARD VAL(value) */" may be used for processing the table "without_shard_table" absent a shard key when a single shard key is present in the single database 400. For example, the hint may be included in a query as follows.

```
  SELECT * FROM emp
      WHERE emp no = /*+ SHARD_KEY*/?
  SELECT * FROM without_shard_table
      WHERE /*+ SHARD VAL(1) */no ='a'
```

A second "SELECT" statement illustrates that a value of a column "no" places an inquiry as to data 'a' in the table "without_shard_table" absent a shard key using a predetermined shard key value "1".

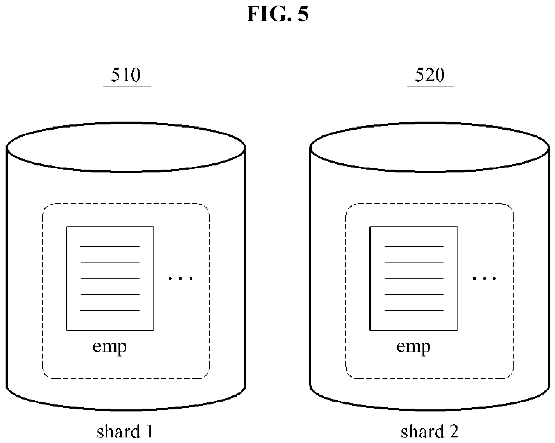

FIG. 5 is a diagram illustrating a method for selecting data in a shard when a single shard key is present in a single database according to an exemplary embodiment of the present invention. FIG. 5 illustrates a database 510 identified as "shard 1" and a database 520 identified as "shard 2". Here, the database 510 and the database 520 may have an identical database name. The databases 510 and 520 may include a table "emp" including a column referred to as "empno". Here, a hint "/*+ SHARD_ALL */" may be used.

```
SELECT * FROM emp
      WHERE emp no = /*+ SHARD_KEY*/?
  SELECT * FROM emp /*+ SHARD ALL */
```

In this instance, data may be returned in a bound database by binding "shard 1" or "shard 2" dynamically based on "?" in a first "SELECT" statement.

Also, the hint "/*+ SHARD ALL */" may indicate that data of "shard 1" and data of "shard 2" may both be returned. Here, an application may receive the data of "shard 2", subsequent to receiving a total of the data of "shard 1" through "'getMoreResult API".

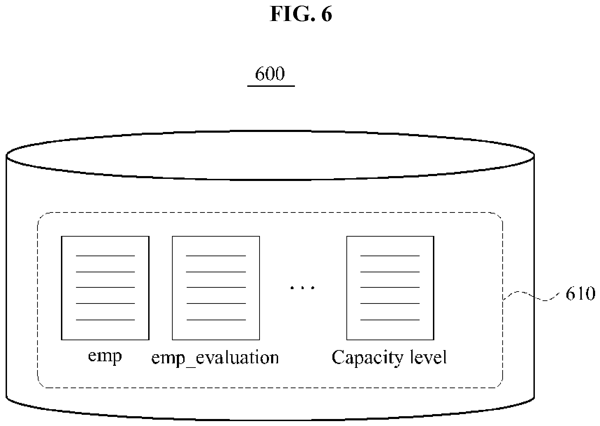

FIG. 6 is a diagram illustrating a method for selecting data when a plurality of shard keys is present in a single database according to an exemplary embodiment of the present invention. A database 600 may include a user table 610.

Here, the user table 610 illustrates two tables "emp" and "emp_evaluation" including a column referred to as "emp_no", and further illustrate a "capacity level" table including a column referred to as "level". In this instance, the database middleware 230 of FIG. 2 may include shard metadata, and for example, the shard metadata may include information for identifying a necessary table or level such as "emp_no" and "level". As described above, the shard metadata may be included in each of the plurality of databases according to another exemplary embodiment of the present invention.

In this instance, a hint "/*+ SHARD_KEY(name) /" may be used. Here, "name" may correspond to necessary "level". For example, a third "SELECT" statement may indicate that the hint "/*+ SHARD_KEY(name) /" is used to select a necessary shard key from among a plurality of shard keys included in a single database 600 through "level".

```
  SELECT * FROM emp
          WHERE emp no = /*+ SHARD KEY(emp no) */?
  SELECT * FROM emp_evaluation
          WHERE emp no = /*+ SHARD KEY (emp no) */1
  SELECT * FROM capacity level
          WHERE level = /*+ SHARD KEY (level) */?
```

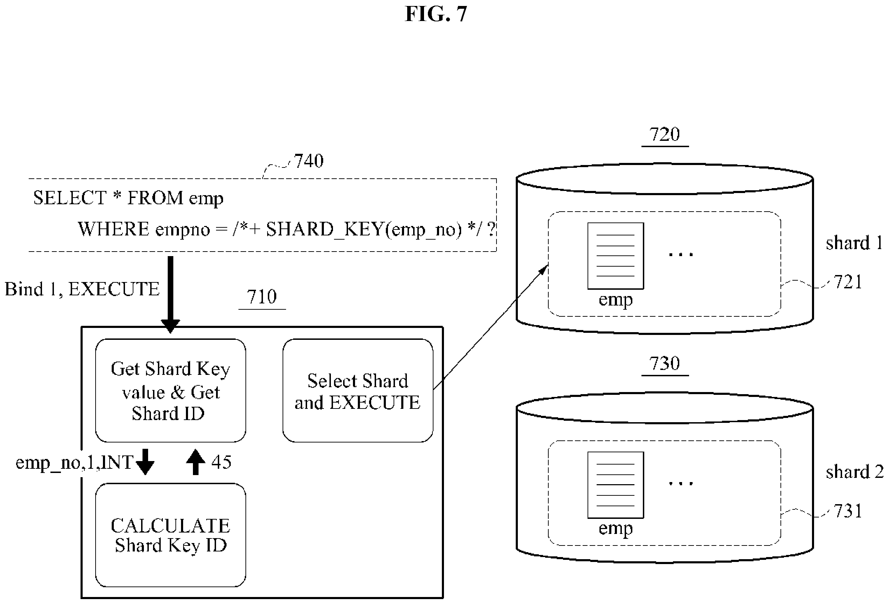

FIG. 7 is a diagram illustrating an example of a method for creating a shard key identifier and selecting a shard according to an exemplary embodiment of the present invention. FIG. 7 illustrates database middleware 710, a database 720 identified as "shard 1", and a database 730 identified as "shard 2". Here, the database 720 may include a user table 721 and the database 730 may include a user table 731.

In this instance, when a query 740 is input to the database middleware 710, the database middleware 710 may calculate a hash value with respect to a shard key using a calculation scheme provided by the database middleware 710 or a user defined function, and execute a query by selecting a shard ID through applying a rule based on content of shard metadata included in the database middleware using the calculated hash value. Here, the shard metadata may be included in each of databases according to another exemplary embodiment of the present invention.

As described above, a plurality of databases may be classified as a plurality of shards. For example, an N number of databases may be classified as an M number of shards. In this instance, both of N and M may be integers, and N may be greater than or equal to M. When a number of databases classified as a single shard is plural, the plurality of databases classified as the single shard may be an identical type of databases.

FIG. 7 illustrates an example in which a query is executed by placing an inquiry as to shard metadata of the database middleware 710 using a shard key ID "45" to verify "1" as a necessary shard ID, and selecting the database 720 identified as "shard 1".

A single shard key hint may be indicated for each shard key value in a query, and when at least one shard key hint is used, each hint may be applied to an identical shard ID. Also, a JOIN query that exceeds a shard may not be supported.

A data management system according to an exemplary embodiment of the present invention may include database middleware, and the database middleware may include a shard processing module. Here, the shard processing module may create a shard key ID based on a query input, and select a shard ID using the created shard key ID and shard metadata set in the database middleware. In this instance, the database middleware may select a single database among a plurality of databases through the selected shard ID. For example, the database middleware 230 may create a hash value as the shard key ID by hashing the shard key using a hash function.

Here, the plurality of databases may include heterogeneous databases. However, databases classified as a single shard may be configured by an identical type of databases. In this instance, the database middleware may further include a plurality of client library modules executing queries, for each of the heterogeneous databases as necessary. Also, the database middleware may further include at least one of a job queue module to distribute a request from an application for a connection, to an available process, a connection pooling module to maintain a simultaneous connection of multiple users to a database and to reuse the connection when necessary, a monitoring module to collect state information and statistics information through a real-time monitoring, a database interface module to process a database instruction from a user, and a logging module to create an event log with respect to occurrences of an error or a query being executed.

Here, the shard processing module may select a shard ID by further using a predetermined hint included in a query input. The predetermined hint may include at least one of a hint preceding a shard key value, for example, a bind variable or a literal value, to select the shard ID for processing the query input when a single shard key is present in a single database, a hint to process a table absent a shard key when a single shard key is present in a single database, a hint to select data included in each shard when a single shard key is present in a single database, and a hint to select data by selecting a predetermined shard key when a plurality of shard keys is present in a single database. The hints are described with reference to FIGS. 3 to 6 in the foregoing.

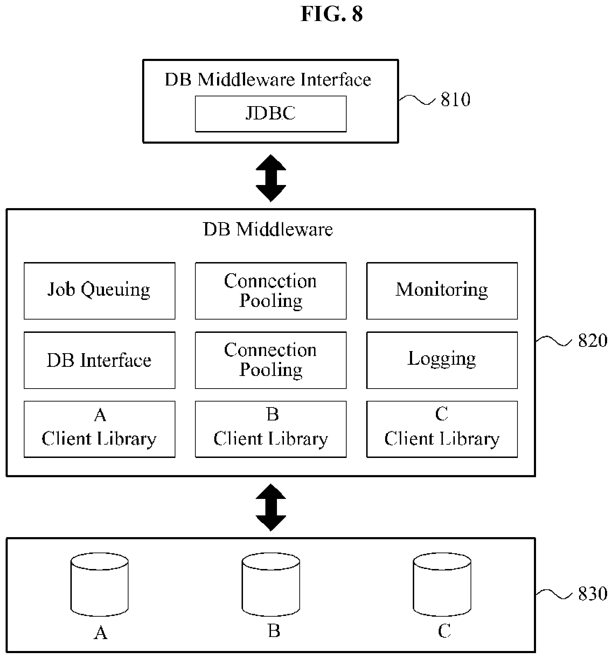

FIG. 8 is a block diagram illustrating an example of an internal configuration of a data management system according to an exemplary embodiment of the present invention. FIG. 8 illustrates "DB Middleware Interface" 810 as an application, "DB Middleware" 820 as the database middleware, and three different types of databases, that is, "A", "B", and "C" 830 as the heterogeneous databases, respectively.

Here, the "DB Middleware" 820 illustrates an example including a total of the aforementioned modules. Also, "DB Middleware Interface" 810 illustrates an example in which "DB Middleware Interface" 810 includes "Java database connectivity (JDBC)" as an application interface for connecting a database to execute a standard search language (SQL) in a Java program.

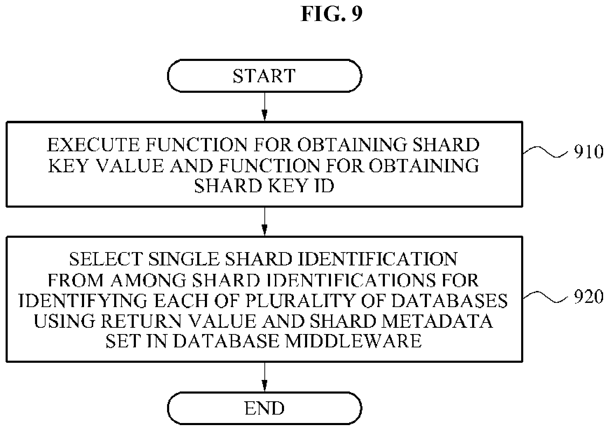

FIG. 9 is a flowchart illustrating a data management method according to an exemplary embodiment of the present invention.

In operation 910, a data management system may execute a function for obtaining a shard key value and a function for obtaining a shard key ID. Here, the shard key ID may be created as a hash value obtained by hashing the shard key value. In particular, the function for obtaining the shard key ID may be a hash function for hashing the shard key value.

In operation 920, the data management system may select a single shard ID from among shard IDs for identifying each of a plurality of databases using a return value of functions and shard metadata set in the database middleware.

Operations 910 and 920 may be conducted by the database middleware included in the data management system, more particularly, by the shard processing module included in the database middleware.

Here, the plurality of databases may include heterogeneous databases. However, databases classified as a single shard may be configured by an identical type of database. In this instance, the database middleware may further include a plurality of client library modules executing queries, for each of the heterogeneous databases as necessary. Also, the database middleware may further include at least one of a job queue module to distribute a request from an application for a connection, to an available process, a connection pooling module to maintain a simultaneous connection of multiple users to a database and to reuse the connection when necessary, a monitoring module to collect state information and statistics information through a real-time monitoring, a database interface module to process a database instruction from a user, and a logging module to create an event log with respect to occurrences of an error or a query being executed.

Also, in operation 920, the data management system may select a shard ID by further using a predetermined hint included in a query input. The predetermined hint may include at least one of a hint preceding a shard key value, that is, a bind variable or a literal value, to select the shard ID for processing the query input when a single shard key is present in a single database, a hint to process a table absent a shard key when a single shard key is present in a single database, a hint to select data included in each shard when a single shard key is present in a single database, and a hint to select data by selecting a predetermined shard key when a plurality of shard keys is present in a single database. The hints are described with reference to FIGS. 3 to 6 in the foregoing.

According to exemplary embodiments of the present invention, it is possible to reduce complexity of an application by searching for a single database appropriate for a request from the application from among a plurality of databases to place an inquiry as to data and provide the data through a sharding process in database middleware.

According to exemplary embodiments of the present invention, it is possible to divide tables additionally or increase a database using database middleware including a shard processing module, without changing an application.

According to exemplary embodiments of the present invention, it is possible to use various hashing schemes such as an internal hashing scheme, a hashing scheme registered by a user, and the like.

The exemplary embodiments according to the present invention may be recorded in computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts. Examples of computer-readable media include magnetic media such as hard disks, floppy disks, and magnetic tape; optical media such as CD ROM discs and DVD; magneto-optical media such as floptical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described exemplary embodiments of the present invention.

It will be apparent to those skilled in the art that various modifications and variation can be made in the present invention. Thus, it is intended that the present invention cover the modifications and variations of the invention provided they come within the scope of the appended claims and their equivalents.

## Claims

1. A data management system including database middleware (230), wherein the database middleware comprises:
a shard processing module (231) to create a shard key identification based on a query input and, select a single database of a plurality of databases (220) through a shard identification determined using the created shard key identification and shard metadata, the shard metadata comprising information for identifying a table,
wherein the shard processing module (231) selects the shard identification by further using a predetermined hint included in the query input provided by a plurality of terminals (210),
wherein the plurality of databases (220) comprises heterogeneous databases, and
the database middleware (230) further comprises a plurality of client library modules executing queries for each of the heterogeneous databases, respectively,
wherein the predetermined hint comprises:
a hint preceding a bind variable or a literal value to select the shard identification for processing the query input when a single shard key is present in a single database,
a hint to process a table without a shard key when a single shard key is present in a single database,
a hint to select data included in each shard when a single shard key is present in a single database, or
a hint to select data by selecting a predetermined shard key when a plurality of shard keys is present in a single database.

2. The data management system of claim 1, wherein the database middleware (230) further comprises:
at least one of a job queue module to distribute a request from an application for a connection, to an available process, a connection pooling module to maintain a simultaneous connection of multiple users to a database and to reuse the connection when necessary, a monitoring module to collect state information and statistics information through a real-time monitoring, a database interface module to process a database instruction from a user, and a logging module to create an event log with respect to occurrences of an error or a query being executed.

3. A data management method in a data management system including database middleware (230), wherein a shard processing module (231) included in the database middleware comprises:
executing (910) a function to obtain a shard key value and a function to obtain a shard
key identification (ID); and
selecting (920) a single shard ID from among shard IDs for identifying each of a plurality of databases using return values of the functions and shard metadata set in the database middleware, the shard metadata comprising information for identifying a table,
wherein the selecting of the shard ID comprises selecting the shard ID further using a predetermined hint included in the query input provided by a plurality of terminals (210),
wherein the plurality of databases comprises heterogeneous databases, and
the database middleware (230) further comprises a plurality of client library modules executing queries for each of the heterogeneous databases, respectively,
wherein the predetermined hint comprises:
a hint preceding a bind variable or a literal value to select the shard ID for processing the query input when a single shard key is present in a single database,
a hint to process a table without a shard key when a single shard key is present in a single database,
a hint to select data included in each shard when a single shard key is present in a single database, or
a hint to select data by selecting a predetermined shard key when a plurality of shard keys is present in a single database.

4. The method of claim 3, wherein the database middleware (230) further comprises:
at least one of a job queue module to distribute a request from an application for a connection, to an available process, a connection pooling module to maintain a simultaneous connection of multiple users to a database and to reuse the connection when necessary, a monitoring module to collect state information and statistics information through real-time monitoring, a database interface module to process a database instruction from a user, and a logging module to create an event log with respect to occurrences of an error or a query being executed.

5. A computer-readable medium having recorded thereon a computer-readable program comprising code means adapted to perform all steps of the method of claims 3 or 4, when said program is run on a computer.

## Patentansprüche

1. Datenverwaltungssystem umfassend eine Datenbank-Middleware (230), wobei die Datenbank-Middleware umfasst:
ein Shard-Verarbeitungsmodul (231) zum Erzeugen einer Shard-Schlüsselidentifikation basierend auf einer Abfrageeingabe, Auswählen einer einzelnen Datenbank aus einer Vielzahl von Datenbanken (220) durch eine Shard-Identifikation, die unter Verwendung der erzeugten Shard-Schlüsselidentifikation und Shard-Metadaten ermittelt wird, wobei die Shard-Metadaten Informationen zum Identifizieren einer Tabelle umfassen,
wobei das Shard-Verarbeitungsmodul (231) die Shard-Identifikation unter weiterer Verwendung eines vorgebebenen Hinweises auswählt, welcher in der Abfrageeingabe enthalten ist, die von einer Vielzahl von Terminals (210) bereitgestellt wird,
wobei die Vielzahl von Datenbanken (220) heterogene Datenbanken umfasst, und
die Datenbank-Middleware (230) des Weiteren eine Vielzahl von Client-Bibliotheksmodulen umfasst, die für jede der heterogenen Datenbanken jeweils Abfragen ausführen,
wobei der vorgegebene Hinweis umfasst:
einen Hinweis, der einer Bindevariable oder einem Literalwert vorausgeht, um die Shard-Identifikation zum Verarbeiten der Abfrageeingabe auszuwählen, wenn ein einzelner Shard-Schlüssel in einer einzelnen Datenbank vorliegt,
einen Hinweis, um eine Tabelle ohne einen Shard-Schlüssel zu verarbeiten, wenn ein einzelner Shard-Schlüssel in einer einzelnen Datenbank vorliegt,
einen Hinweis, um Daten auszuwählen, die in jedem Shard enthalten sind, wenn ein einzelner Shard-Schlüssel in einer einzelnen Datenbank vorliegt, oder
einen Hinweis, um Daten durch Auswählen eines vorgegebenen Shard-Schlüssels auszuwählen, wenn eine Vielzahl von Shard-Schlüsseln in einer einzelnen Datenbank vorliegt.

2. Das Datenverwaltungssystem nach Anspruch 1, wobei die Datenbank-Middleware (230) des Weiteren wenigstens eines der folgenden Module umfasst:
ein Auftragsschlangenmodul, um eine Anfrage einer Applikation nach einer Verbindung an einen verfügbaren Prozess zu vergeben, ein Verbindungspooling-Modul, um eine gleichzeitige Verbindung einer Vielzahl von Benutzern mit einer Datenbank aufrecht zu erhalten und die Verbindung nötigenfalls wiederzuverwenden, ein Monitormodul, um Zustandsinformation und Statistikinformation mittels einer Echtzeitüberwachung zu sammeln, ein Datenbankschnittstellenmodul, um eine Datenbankanweisung eines Benutzers zu verarbeiten, und ein Protokollierungsmodul, um ein Ereignisprotokoll bezüglich Auftretens eines Fehlers oder einer ausgeführten Warteschlange zu erzeugen.

3. Datenverwaltungsverfahren in einem Datenverwaltungssystem, umfassend eine Datenbank-Middleware (230), wobei ein in der Datenbank-Middleware enthaltenes Shard-Verarbeitungsmodul (231) umfasst:
Ausführen (910) einer Funktion, um einen Shard-Schlüsselwert zu erhalten, und einer Funktion, um eine Shard-Schlüsselidentifikation (ID) zu erhalten; und
Auswählen (920) einer einzelnen Shard-ID aus Shard-IDs zum Identifizieren jeder einer Vielzahl von Datenbanken unter Verwendung von Rückgabewerten der Funktionen und Shard-Metadaten, die in der Datenbank-Middleware gesetzt sind, wobei die Shard-Metadaten Informationen zum Identifizieren einer Tabelle umfassen,
wobei das Auswählen der Shard-ID ein Auswählen der Shard-ID unter weiterer Verwendung eines vorgegebenen Hinweises umfasst, der in der Abfrageeingabe enthalten ist, die von einer Vielzahl von Terminals (210) bereitgestellt wird,
wobei die Vielzahl von Datenbanken heterogene Datenbanken umfasst, und
die Datenbank-Middleware (230) des Weiteren eine Vielzahl von Client-Bibliotheksmodulen umfasst, die für jede der heterogenen Datenbanken jeweils Abfragen ausführen,
wobei der vorgegebene Hinweis umfasst:
einen Hinweis, der einer Bindevariable oder einem Literalwert vorausgeht, um die Shard-ID zum Verarbeiten der Abfrageeingabe auszuwählen, wenn ein einzelner Shard-Schlüssel in einer einzelnen Datenbank vorliegt,
einen Hinweis, um eine Tabelle ohne einen Shard-Schlüssel zu verarbeiten, wenn ein einzelner Shard-Schlüssel in einer einzelnen Datenbank vorliegt,
einen Hinweis, um Daten auszuwählen, die in jedem Shard enthalten sind, wenn ein einzelner Shard-Schlüssel in einer einzelnen Datenbank vorliegt, oder
einen Hinweis, um Daten durch Auswählen eines vorgegebenen Shard-Schlüssels auszuwählen, wenn eine Vielzahl von Shard-Schlüsseln in einer einzelnen Datenbank vorliegt.

4. Verfahren nach Anspruch 3, wobei die Datenbank-Middleware (230) des Weiteren wenigstens eines der folgenden Module umfasst:
ein Auftragsschlangenmodul, um eine Anfrage einer Applikation nach einer Verbindung an einen verfügbaren Prozess zu vergeben, ein Verbindungspooling-Modul, um eine gleichzeitige Verbindung einer Vielzahl von Benutzern mit einer Datenbank aufrecht zu erhalten und die Verbindung nötigenfalls wiederzuverwenden, ein Monitormodul, um Zustandsinformation und Statistikinformation mittels einer Echtzeitüberwachung zu sammeln, ein Datenbankschnittstellenmodul, um eine Datenbankanweisung eines Benutzers zu verarbeiten, und ein Protokollierungsmodul, um ein Ereignisprotokoll bezüglich Auftretens eines Fehlers oder einer ausgeführten Warteschlange zu erzeugen.

5. Computerlesbares Medium mit einem darauf aufgezeichneten computerlesbaren Programm umfassend eine Programmcode-Einrichtung, die eingerichtet ist, um alle Schritte des Verfahrens gemäß den Ansprüchen 3 oder 4 auszuführen, wenn das Programm auf einem Computer ausgeführt wird.

## Revendications

1. Système de gestion de données incluant un middleware de base de données (230), dans lequel l'intergiciel de base de données comprend :
un module de traitement de fragment (231) pour créer une identification de clé de fragment sur la base d'une entrée de requête et, sélectionner une seule base de données d'une pluralité de bases de données (220) par l'intermédiaire d'une identification de fragment déterminée en utilisant l'identification de clé de fragment créée et des métadonnées de fragment, les métadonnées de fragment comprenant des informations pour identifier un tableau,
dans lequel le module de traitement de fragment (231) sélectionne l'identification de fragment en utilisant en outre un algorithme d'optimisation prédéterminé inclus dans l'entrée de requête fournie par une pluralité de terminaux (210),
dans lequel la pluralité de bases de données (220) comprend des bases de données hétérogènes, et
l'intergiciel de base de données (230) comprend en outre une pluralité de modules de bibliothèques clients exécutant des requêtes pour chacune des bases de données hétérogènes, respectivement,
dans lequel le algorithme d'optimisation prédéterminé comprend :
un algorithme d'optimisation précédant une variable de liaison ou une valeur littérale pour sélectionner l'identification de fragment pour traiter l'entrée de requête lorsqu'une seule clé de fragment est présente dans une seule base de données,
un algorithme d'optimisation pour traiter un tableau sans clé de fragment lorsqu'une seule clé de fragment est présente dans une seule base de données,
un algorithme d'optimisation pour sélectionner des données incluses dans chaque fragment lorsqu'une seule clé de fragment est présente dans une seule base de données, ou
un algorithme d'optimisation pour sélectionner des données en sélectionnant une clé de fragment prédéterminée lorsqu'une pluralité de clés de fragment sont présentes dans une seule base de données.

2. Système de gestion de données selon la revendication 1, dans lequel l'intergiciel de base de données (230) comprend en outre :
au moins l'un parmi un module de file d'attente de travaux pour distribuer une demande en provenance d'une application pour une connexion, à un processus disponible, un module de mise en commun de connexion pour maintenir une connexion simultanée de multiples utilisateurs à une base de données et pour réutiliser la connexion lorsque nécessaire, un module de surveillance pour collecter des informations d'état et des informations de statistiques par l'intermédiaire d'une surveillance en temps réel, un module d'interface de base de données pour traiter une instruction de base de données en provenance d'un utilisateur, et un module de journalisation pour créer un journal des événements en ce qui concerne des occurrences d'une erreur ou une requête en cours d'exécution.

3. Procédé de gestion de données dans un système de gestion de données incluant un middleware de base de données (230), dans lequel un module de traitement de fragment (231) inclus dans l'intergiciel de base de données comprend :
l'exécution (910) d'une fonction pour obtenir une valeur de clé de fragment et d'une fonction pour obtenir une identification de clé de fragment (ID) ; et
la sélection (920) d'une seule ID de fragment parmi des ID de fragment pour identifier chacune d'une pluralité de bases de données en utilisant des valeurs de retour des fonctions et des métadonnées de fragment définies dans l'intergiciel de base de données, les métadonnées de fragment comprenant des informations pour identifier un tableau,
dans lequel la sélection de l'ID de fragment comprend la sélection de l'ID de fragment en utilisant en outre un algorithme d'optimisation prédéterminé inclus dans l'entrée de requête fournie par une pluralité de terminaux (210),
dans lequel la pluralité de bases de données comprend des bases de données hétérogènes, et
l'intergiciel de base de données (230) comprend en outre une pluralité de modules de bibliothèques clients exécutant des requêtes pour chacune des bases de données hétérogènes, respectivement,
dans lequel le algorithme d'optimisation prédéterminé comprend :
un algorithme d'optimisation précédant une variable de liaison ou une valeur littérale pour sélectionner l'ID de fragment pour traiter l'entrée de requête lorsqu'une seule clé de fragment est présente dans une seule base de données,
un algorithme d'optimisation pour traiter un tableau sans clé de fragment lorsqu'une seule clé de fragment est présente dans une seule base de données,
un algorithme d'optimisation pour sélectionner des données incluses dans chaque fragment lorsqu'une seule clé de fragment est présente dans une seule base de données, ou
un algorithme d'optimisation pour sélectionner des données en sélectionnant une clé de fragment prédéterminée lorsqu'une pluralité de clés de fragment sont présentes dans une seule base de données.

4. Procédé selon la revendication 3, dans lequel l'intergiciel de base de données (230) comprend en outre :
au moins l'un parmi un module de file d'attente de travaux pour distribuer une demande en provenance d'une application pour une connexion, à un processus disponible, un module de mise en commun de connexion pour maintenir une connexion simultanée de multiples utilisateurs à une base de données et pour réutiliser la connexion lorsque nécessaire, un module de surveillance pour collecter des informations d'état et des informations de statistiques par l'intermédiaire d'une surveillance en temps réel, un module d'interface de base de données pour traiter une instruction de base de données en provenance d'un utilisateur, et un module de journalisation pour créer un journal des événements en ce qui concerne des occurrences d'une erreur ou une requête en cours d'exécution.

5. Support lisible par ordinateur sur lequel est enregistré un programme lisible par ordinateur comprenant des moyens de code adaptés pour effectuer toutes les étapes du procédé selon les revendications 3 ou 4, lorsque ledit programme est exécuté sur un ordinateur.
